# EUROPEAN PATENT SPECIFICATION

(11) **EP 3 050 734 B1**
(45) Date of publication and mention of the grant of the patent: **11.09.2019**
(21) Application number: 14849026.1
(22) Date of filing: 25.09.2014
(51) Int. Cl.: B60K 15/03, B29C 49/04, B29C 49/20, B29C 49/22, F02M 37/00

(54) **PROCESS FOR THE PRODUCTION OF AN AUTOMOBILE FUEL TANK**
VERFAHREN ZUR HERSTELLUNG EINES TREIBSTOFFTANKS FÜR EIN KRAFTFAHRZEUG
PROCEDE DE PRODUCTION D'UN RESERVOIR DE CARBURANT AUTOMOBILE

(30) Priority: 25.09.2013 JP 2013197891; 25.09.2013 JP 2013197892
(43) Date of publication of application: 03.08.2016
(73) Proprietor: Honda Motor Company Limited, Tokyo 107-8556 (JP)
(72) Inventor: TANAKA Kotaro, Wako-shi Saitama 351-0193 (JP); KITAMURA Hiroshi, Wako-shi Saitama 351-0193 (JP)
(74) Representative: Weickmann & Weickmann PartmbB
(86) International application number: PCT/JP2014/075384
(87) International publication number: WO 2015/046307

(56) References cited:
- JP-A- H0 740 998
- JP-A- H0 740 998
- JP-A- 2008 030 664
- JP-A- 2008 030 664
- JP-A- 2009 241 625
- JP-A- 2011 168 072
- JP-U- H 068 045
- JP-U- H01 130 827

## Description

### TECHNICAL FIELD

The present invention relates to a method of producing an automobile fuel tank.

### BACKGROUND ART

For example, Japanese Unexamined Patent Application Publication No.JP 2009-001048 A (Patent Literature 1) discloses a fuel tank structure in which a covering material is welded to and covers an outer surface of a tank body which is a blow-molded article, thereby making it possible to form a heat insulating layer on an outer side of the tank body.

More specifically, the covering material is composed of knitting made of hollow fibers formed of an upper half and a lower half, and the knitting covers the outer surface of the tank body to form the heat insulating layer.

A method of producing an automobile fuel tank according to the preamble of claim 1 is known from JP H07-40998 A.

JP 2008-030664 A discloses a fuel tank which is provided with an inner layer, a barrier layer and an external layer, and is provided with a heat-insulating layer in which an air-sealed micro hollow body has been mixed.

### SUMMARY OF THE INVENTION

### Technical Problem

However, the fuel tank structure disclosed in Patent Literature 1 requires a process for attaching the knitting to the outer surface of the tank body after blow molding, thus making a production process complicated.

Also, in order to enhance heat insulation properties, there is an idea that a heat insulating layer is disposed on an outer side of a tank body made of resin. This approach, however, requires a post-process after formation of the tank body, thus making a production process likewise complicated.

A general object of the present invention is to provide a method of producing an automobile fuel tank capable of enhancing heat insulation properties with a simple, light and stable structure.

### Solution to Problem

In order to achieve the above object, the present invention provides a method of producing an automobile fuel tank comprising a tank body, an outer wall of the tank body being formed of a synthetic resin layer composed of a multilayer configuration, wherein the synthetic resin layer includes an inner body layer and an outer body layer with a barrier layer interposed between the inner body layer and the outer body layer, and the inner body layer includes a base layer and a structural member with an air space internally provided, characterized in that that the method comprises: forming the outer wall of the inner body layer and the outer body layer with the barrier layer interposed between the inner body layer and the outer body layer, exclusive of the structural member that is a foamed layer in which a same resin as the base layer is foamed; and welding the foamed layer only to an inner face of the inner body layer.

According to the present invention, the air space provided inside the structural member allows a heat insulating effect to be obtained, thereby making it possible to enhance heat insulation properties with a simple structure and to suppress generation of fuel vapor, and the structural member included in the inner body layer produces a reinforcement effect, thereby making it possible to enhance strength of the outer wall of the tank body. Thus, the present invention allows the structural member to be included in the inner body layer, thus making it possible to have both the heat insulating effect and the reinforcement effect.

According to the present invention, the foamed layer (heat insulating layer) is included in the inner body layer constituting the outer wall of the tank body, thereby making it possible to omit a post-process, such as attaching a heat insulating layer onto the outer side of the tank body, which has been carried out in the past. As a result, the present invention makes it possible to enhance heat insulation properties with a simple structure and to suppress generation of fuel vapor. Also, according to the present invention, the foamed layer is formed by foaming with the same resin as the base layer (for example, high density polyethylene: HDPE), thereby allowing the base layer and the foamed layer to be easily welded to each other. Moreover, the base layer and the foamed layer are welded to adhere tightly to each other, thereby allowing durability to be enhanced.

Furthermore, the method of producing the automobile fuel tank according to the present invention includes: forming the outer wall of the inner body layer and the outer body layer with the barrier layer interposed between the inner body layer and the outer body layer, exclusive of the structural member that is a foamed layer in which a same resin as the base layer is foamed; and welding the foamed layer only to an inner face of the inner body layer.

### Advantageous Effects of the Invention

The present invention allows a method of producing an automobile fuel tank to be obtained, which is capable of enhancing heat insulation properties with a simple structure.

### Brief Description of Drawings

FIG.1 is a perspective view of a fuel tank produced by a production process not according to the present invention.
FIG.2 is a partially enlarged cross-sectional view showing a structure of an outer wall of the fuel tank in FIG.1.
FIGS.3A to 3C are explanatory views showing a production process in which the fuel tank is formed by twin-sheet blow molding.
FIG.4 is a partially enlarged cross-sectional view showing a structure of an outer wall of a fuel tank according to a modified example not according to the invention.
FIGS.5A to 5E are explanatory views showing another production process for the fuel tank.
FIG.6 is a partially enlarged cross-sectional view showing a structure of an outer wall of a fuel tank produced by a production process according to an embodiment of the present invention.
FIGS.7A to 7C are explanatory views showing a production process for the fuel tank in FIG.6.
FIGS.8A to 8D are explanatory views showing a production process in which the fuel tank in FIG.6 is formed by continuous extrusion molding.
FIG.9A is an explanatory view of a process in which the fuel tank in FIG.6 is formed by another continuous extrusion molding; FIG.9B is a transverse cross-sectional view taken along the line A-A in FIG.9A; and FIG.9C is an enlarged cross-sectional view of the portion B in FIG.9B.
FIG.10A is a partially enlarged cross-sectional view showing a structure of an outer wall of a fuel tank according to a first modified example of another embodiment; FIG.10B is a partially enlarged cross-sectional view showing a structure of an outer wall of a fuel tank according to a second modified example of another embodiment; and FIG.10C is an explanatory view showing a production process for a fuel tank according to a third modified example of another embodiment.

### Description of Embodiments

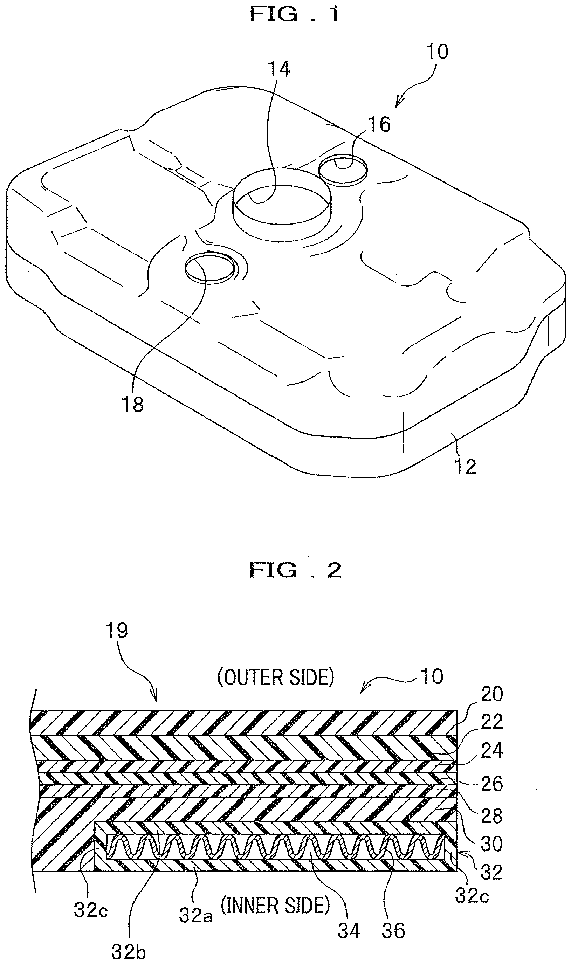

Next, embodiments of the present invention will be described in detail with reference to the drawings as appropriate. FIG.1 is a perspective view of a fuel tank produced by a production process according to an example not according to present invention, and FIG.2 is a partially enlarged cross-sectional view showing a structure of an outer wall of the fuel tank in FIG.1.

The fuel tank (automobile fuel tank) 10 is attached and fixed to a vehicle body of the automobile (not shown). The fuel tank 10 includes a shell-shaped tank body 12 as shown in FIG.1, and provided on a top face of the tank body 12 are a pump attachment hole 14 for attaching thereto a pump (not shown) or the like, an attachment hole 16 for connecting thereto a hose or the like which is used in recovering internal fuel vapor, and an attachment hole 18 for connecting thereto a return pipe (not shown). Moreover, provided on a lateral face of the fuel tank 10 is a fuel inlet (not shown) for filling fuel through an inlet pipe (not shown).

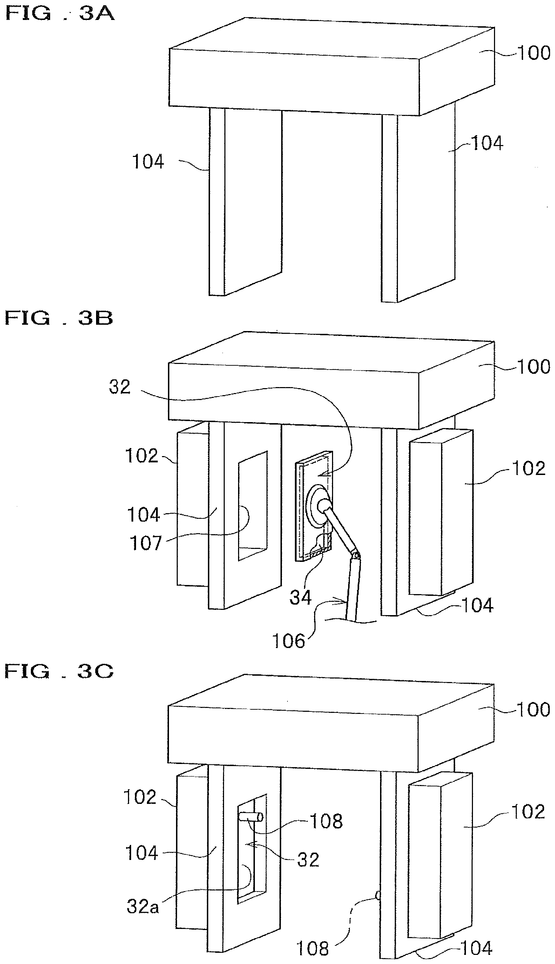

The fuel tank 10 is formed by, for example, blow molding, extrusion molding, or the like. In the present example, by way of example, description will be given of the fuel tank 10 formed by twin-sheet blow molding as shown in FIGS.3A to 3C to be described later.

As shown in FIG.2, an outer wall 19 of the tank body 12 is formed of, in order from an outer side toward an inner side, an upper skin layer 20, an outer base layer 22, an outer adhesive layer 24, a barrier layer 26, an inner adhesive layer 28, an inner base layer (base layer) 30, and a structural member 32. The structural member 32 has an air space 34 internally provided. Also, the structural member 32 constitutes an inner wall in contact with fuel oil, such as gasoline, which is fed into the tank body 12. Employed in the twin-sheet blow molding shown in FIGS.3A to 3C is a flat parison 104 which is formed of six layers exclusive of the structural member 32 described above. Details of FIGS.3A to 3C will be described later.

The outer wall 19 of the tank body 12 is formed of a synthetic resin layer composed of a multilayer configuration, and constituted by an inner body layer (the inner adhesive layer 28, the inner base layer 30, and the structural member 32) and an outer body layer (the upper skin layer 20, the outer base layer 22, and the outer adhesive layer 24) with the barrier layer 26 interposed therebetween. More specifically, the outer wall 19 of the tank body 12 is constituted by a multilayer structure in which the barrier layer 26 composed of a material with good impermeability to fuel is sandwiched at least between an inner thermoplastic resin layer forming an inner surface of the tank and an outer thermoplastic resin layer forming an outer surface of the tank.

The upper skin layer 20 and the outer base layer 22 are formed of thermoplastic synthetic resin which has a high impact resistance and allows its rigidity to be maintained to fuel oil. Examples of such thermoplastic synthetic resin include polyethylene resin, polyamide resin, polyester resin or the like. Where the skin layer 20 is formed of polyethylene resin, it is preferably formed of high density polyethylene (HDPE).

Where the outer base layer 22 is formed of polyethylene resin, reclaimed resin (regrind material) can be used therefor. For example, for reclaimed resin containing high density polyethylene (HDPE) as a chief material, the fuel tank 10 collected after use or a fuel tank judged as a defective in its production process may be crushed to be recycled for use.

The outer adhesive layer 24 is provided between the outer base layer 22 and the barrier layer 26 to allow the outer base layer 22 and the barrier layer 26 to adhere to each other. Examples of adhesive synthetic resin used for the outer adhesive layer 24 include modified polyolefin resin or the like. In particular, unsaturated carboxylic acid modified polyethylene resin is good.

Note that in the present example, the outer body layer is composed of the upper skin layer 20, the outer base layer 22 and the outer adhesive layer 24, but composition thereof is not limited to this example. For example, the outer base layer 22 and the outer adhesive layer 24 may be eliminated to allow the upper skin layer 20 and the barrier layer 26 to be directly welded to each other.

The barrier layer 26 is formed of thermoplastic synthetic resin which is little permeable to fuel oil, and is preferably formed of, for example, ethylene vinyl alcohol copolymer (EVOH). Using ethylene vinyl alcohol copolymer (EVOH) for the barrier layer 26 makes it possible to enhance permeation-preventabilty to gasoline.

The inner adhesive layer 28 is provided between the barrier layer 26 and the inner base layer 30 to allow the barrier layer 26 and the inner base layer 30 to adhere to each other. Examples of adhesive synthetic resin used for the inner adhesive layer 28 include modified polyolefin resin or the like as in the outer adhesive layer 24. Especially, unsaturated carboxylic acid modified polyethylene resin is good.

The inner base layer 30 is formed of thermoplastic synthetic resin, similarly to the upper skin layer 20. Examples of such thermoplastic synthetic resin include polyethylene resin, polyamide resin, polyester resin or the like. Where the inner base layer 30 is formed of polyethylene resin, it is preferably formed of high density polyethylene (HDPE).

The structural member 32 is disposed innermost in the inner body layer constituting the outer wall 19 of the tank body 12, and is preferably formed of the same material as the inner base layer 30, for example, high density polyethylene (HDPE). The structural member 32 is retrofitted to the inner body layer in formation of the inner body layer and the outer body layer as described later.

The structural member 32 is composed of a hermetically-sealed member with an air space 34 internally provided, and is constituted by an inner wall portion 32a which is in direct contact with fuel oil such as gasoline, an outer wall portion 32b which is welded to the inner base layer 30, and a side wall portion 32c which connects the inner wall portion 32a with the outer wall portion 32b. Between the inner wall portion 32a and the outer wall portion 32b facing each other, interposed is a plate-like member 36 which is formed to be accordion-folded. The plate-like member 36 may be formed of, for example, a flat plate which is thin and flexible. Moreover, the plate-like member 36 is preferably formed of the same material as the inner base layer 30, for example, high density polyethylene (HDPE) as in the structural member 32.

Note that in the present example, the inner body layer is composed of the inner adhesive layer 28, the inner base layer 30 and the structural member 32, but composition thereof is not limited to this example. For example, the inner adhesive layer 28 may be eliminated to allow the barrier layer 26 and the inner base layer 30 to be directly welded to each other. In this case, the inner body layer is preferably composed of the inner base layer 30 formed of high density polyethylene (HDPE), and the structural member 32 formed of the same high density polyethylene (HDPE) as the inner base layer 30.

The fuel tank 10 according to the present example is basically configured as described above, and a production process thereof will be described below.

FIGS.3A to 3C are explanatory views showing a production process in which the fuel tank is formed by twin-sheet blow molding.

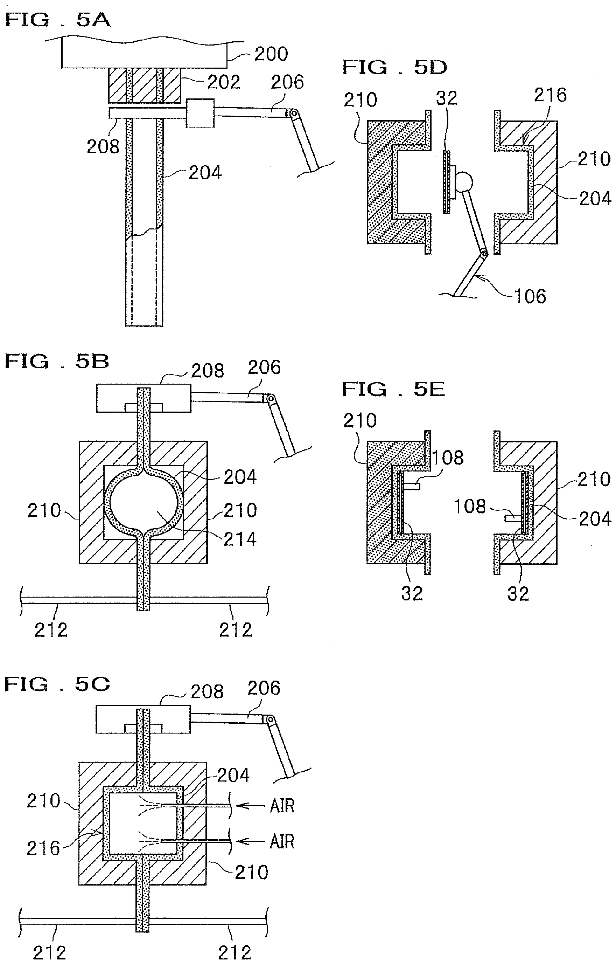

As shown in FIG.3A, two sheet-like flat parisons 104 are moved down by a predetermined length in a nearly parallel fashion, from nozzles (not shown) of a forming die 100. Subsequently, as shown in FIG.3B, a pair of molding dies 102 is positioned in an opened and opposed state under the forming die 100 and then the flat parisons 104 are introduced inside the molding dies 102. FIG.3B shows a state corresponding to FIG.5D.

Note that the two flat parisons 104 are each formed of six layers exclusive of the structural member 32, including the upper skin layer 20, the outer base layer 22, the outer adhesive layer 24, the barrier layer 26, the inner adhesive layer 28 and the inner base layer 30 which are laminated in order from the side close to the molding die 102 toward the side away from the molding die 102. Moreover, the structural member 32 with the air space 34 internally provided and the plate-like member 36 interposed between the inner wall portion 32a and the outer wall portion 32b is formed separately in advance.

In a state in which the flat parison 104 is transferred with vacuuming onto a cavity of the molding die 102 to form a recess 107, as shown in FIG.3B, the sheet-like structural member 32 held to stick fast to an end portion of a robot arm 106 is welded within the recess 107 from the inner side of the flat parison 104.

After the sheet-like structural member 32 is welded, as shown in FIG.3C, the robot arm 106 is used to weld an integrated component (auxiliary component) 108 which is to be integrated into the tank body 12, onto the inner surface of the structural member 32. Thus, the present example makes it possible to perform both welding of the structural member 32 onto the inner body layer and welding of the integrated component 108 in the same process.

The integrated component 108 is composed of, for example, a fuel taking-out part for taking out fuel from the tank body 12, a fuel returning part for returning surplus fuel to the tank body 12, a pump or the like, and means a component which is fixedly provided inside the tank body 12 in advance.

Thereafter, a cutting means such as a cutter (not shown) is used to cut the flat parisons 104, and with the molding dies 102 being clamped, air is blown out from an air nozzle (not shown) into the flat parisons 104 facing each other to allow the outer surfaces of the flat parisons 104 to be pressed against the molding dies 102, thereby forming the fuel tank 10. Then, the molding dies 102 are opened to take out the formed fuel tank 10.

According to the present example, the structural member 32 composed of the same material as the inner base layer 30 and including the air space 34 internally provided can be easily attached to the inner body layer constituting the outer wall 19 of the tank body 12, in a retrofitting process. According to the present example, the air space 34 provided inside the structural member 32 allows a heat insulating effect to be obtained, thereby making it possible to enhance heat insulation properties with a simple structure and to suppress generation of fuel vapor, and the structural member 32 attached to the inner body layer produces a reinforcement effect through the plate-like member 36 interposed inside, thereby making it possible to enhance strength of the outer wall 19 of the tank body 12. Thus, according to the present example, the structural member 32 attached to the inner body layer makes it possible to have both the heat insulating effect and the reinforcement effect of the tank body 12.

Also, according to the present example, the structural member 32 is formed using the same resin as the inner base layer 30 (the inner body layer) (for example, high density polyethylene: HDPE), thereby allowing the structural member 32 to be easily welded to the inner base layer 30 in formation of the inner body layer and the outer body layer. As a result, work for attachment of the structural member 32 to the inner body layer can be easily carried out.

Moreover, according to the present example, the plate-like member 36 is interposed between the inner wall portion 32a and the outer wall portion 32b constituting the structural member 32, thereby making it possible to enhance the heat insulating effect while enhancing the reinforcement effect of the tank body 12.

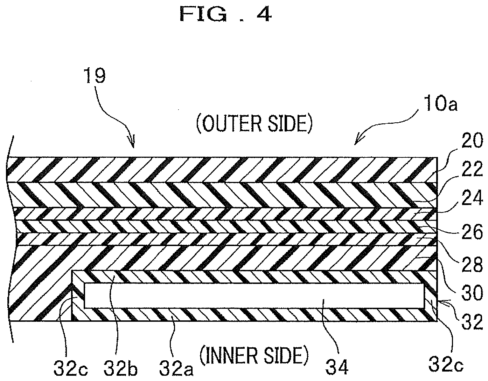

FIG.4 is a partially enlarged cross-sectional view showing a structure of an outer wall of a fuel tank according to a modified example of the example.

A fuel tank 10a according to the modified example is different from the fuel tank 10 shown in FIG.2 in that the plate-like member 36 is not interposed between the inner wall portion 32a and the outer wall portion 32b constituting the structural member 32, and the air space 34 is in the form of hollow.

Note that in the fuel tank 10a, one or more columnar supports (not shown) may be provided between the inner wall portion 32a and the outer wall portion 32b facing each other, in order to enhance the reinforcement effect.

FIGS.5A to 5E are explanatory views showing another production process for the fuel tank. Note that in the description below, the same composing element as the composing element shown in FIG.1 to FIG.3C is denoted by the same reference sign and thus detailed description thereof will be omitted.

Resin plasticized by an extrusion molding device (not shown) is extruded as a cylindrical parison 204, from a nozzle 202 of a forming die 200. The cylindrical parison 204 thus extruded is cut using a cutting means such as a cutter (not shown), with an upper side of the cylindrical parison 204 being gripped by a grip section 208 of a robot hand 206, thereby obtaining the parison 204 having a predetermined length in the up-down direction (see FIG.5A).

Note that the pipe-shaped (tubular) parison 204 gripped by the grip section 208 of the robot hand 206 is formed of six layers exclusive of the structural member 32, including the upper skin layer 20, the outer base layer 22, the outer adhesive layer 24, the barrier layer 26, the inner adhesive layer 28 and the inner base layer 30 which are laminated in order from the outside (outer diameter side) toward the inside (inner diameter side). Moreover, the structural member 32 to be retrofitted is formed separately.

Subsequently, with a pair of molding dies 210 being not closed, and with an upper end portion of the parison 204 being blocked by the grip section 208 of the robot hand 206 and a lower end portion of the parison 204 being blocked by a pinch plate 212, air is fed beforehand into a space 214 blocked by the parison 204 to allow the parison 204 to be inflated (deformed).

Next, the parison 204 thus inflated is sandwiched between the pair of molding dies 210, and with the upper and lower portions of the parison 204 being closed by the pair of molding dies 210 (see FIG.5B), air is fed into the space 214 of the parison 204. This air allows the parison 204 to be further inflated to be pressed against respective inner wall surfaces of the molding dies 210.

The parison 204 is pressed against the inner wall surfaces of the molding dies 210 to be elongated, thereby forming a hollow temporary molded article 216 (see FIG.5C). The hollow temporary molded article 216 is split up into two from nearly the central part (division line of the molding dies) along the vertical direction, with a cutting means such as a cutter (not shown) . Then, with the molding dies 210 being separated from each other, as shown in FIG.5D, the sheet-like structural member 32 held to stick fast to the end portion of the robot arm 106 is welded within the recess from the inner side of the parison 204 adhering to the inner wall surfaces of the molding dies 210.

After the sheet-like structural member 32 is welded, as shown in FIG.5E, the robot arm 106 is used to weld the integrated component (auxiliary component) 108 which is to be integrated into the tank body 12, onto the inner surface of the structural member 32. Thus, even where the cylindrical parison 204 made of a resin material is used to form the fuel tank 10 by the production process shown in FIGS.5A to 5E, welding the structural member 32 to the inner body layer makes it possible to easily attach the structural member 32 to the inner body layer in a retrofitting process. Note that the structural member 32 may be welded, in a retrofitting process, to the cylindrical parison 204 extruded from a continuous extrusion molding device (not shown).

Finally, the pair of molding dies 210 separated from each other is closed to allow respective split faces of the temporary molded articles 216 split up into two to be welded to each other, thereby producing the fuel tank 10.

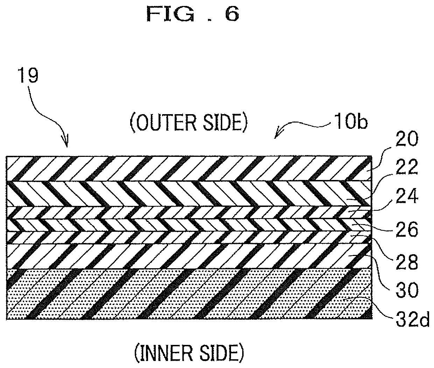

Next, a fuel tank 10b produced by a production process according to an embodiment of the present invention will be described below, with reference to FIG.6 and the subsequent drawings. The fuel tank 10b produced by the production process according to an embodiment has the same configuration in appearance as the fuel tank 10 shown in FIG.1. Note that the same composing element as in the fuel tank 10, 10a shown in FIG.1 to FIG.5E is denoted by the same reference sign and thus detailed description thereof will be omitted.

FIG.6 is a partially enlarged cross-sectional view showing a structure of an outer wall of the fuel tank 10b produced by the production process according to an embodiment of the present invention.

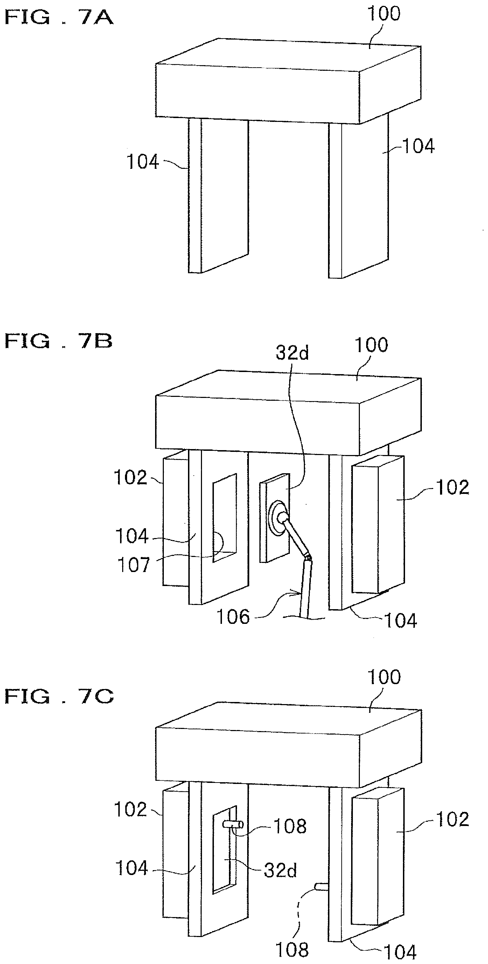

As shown in FIG.6, the outer wall 19 of the fuel tank 10b is formed of, in order from an outer side toward an inner side, the upper skin layer 20, the outer base layer 22, the outer adhesive layer 24, the barrier layer 26, the inner adhesive layer 28, the inner base layer (base layer) 30, and a foamed layer (heat insulating layer) 32d. The foamed layer 32d functions as a structural member having an air space (not shown) internally provided. The foamed layer 32d is a layer in contact with fuel oil, such as gasoline, which is accumulated in the tank body 12. Employed in the twin-sheet blow molding shown in FIGS.7A to 7C is the flat parison 104 which is formed of six layers exclusive of the foamed layer 32d described above.

The outer wall 19 of the tank body 12 is formed of a synthetic resin layer composed of a multilayer configuration, and constituted by the inner body layer (the inner adhesive layer 28, the inner base layer 30, and the foamed layer 32d) and the outer body layer (the upper skin layer 20, the outer base layer 22, and the outer adhesive layer 24) with the barrier layer 26 interposed therebetween. More specifically, the outer wall 19 of the tank body 12 is constituted by a multilayer structure in which the barrier layer 26 composed of a material with good impermeability to fuel is sandwiched at least between the inner thermoplastic resin layer forming the inner surface of the tank and the outer thermoplastic resin layer forming the outer surface of the tank.

The foamed layer 32d functioning as the structural member is disposed innermost (in the innermost layer) in the inner body layer constituting the outer wall 19 of the tank body 12, and is preferably formed of a material in which the same resin as the inner base layer 30 is foamed, for example, foamed high density polyethylene (foamed HDPE) . The foamed layer 32d preferably has the form of closed-cells, thereby suppressing entry of fuel oil into the foamed layer 32d.

Note that in another embodiment, the inner body layer is composed of the inner adhesive layer 28, the inner base layer 30 and the foamed layer 32d, but composition thereof is not limited to this example. For example, the inner adhesive layer 28 may be eliminated to allow the barrier layer 26 and the inner base layer 30 to be directly welded to each other. In this case, the inner body layer is preferably composed of the inner base layer 30 formed of high density polyethylene (HDPE), and the foamed layer 32d formed of foamed high density polyethylene (foamed HDPE) in which the same high density polyethylene (HDPE) as the inner base layer 30 is foamed.

Moreover, in another embodiment, illustration is given of the case in which the foamed layer 32d is disposed innermost (in the innermost layer) in the inner body layer constituting the outer wall 19 of the tank body 12 as shown in FIG.6, but location of the foamed layer 32d is not limited to this example. The foamed layer 32d need only be included in the inner body layer.

The fuel tank 10b according to another embodiment is basically configured as described above, and a production process thereof will be described below.

FIGS.7A to 7C are explanatory views showing a production process for the fuel tank in FIG.6.

As shown in FIG.7A, two sheet-like flat parisons 104 are moved down by a predetermined length in a nearly parallel fashion, from nozzles (not shown) of a forming die 100. Subsequently, as shown in FIG.7B, a pair of molding dies 102 is positioned in an opened and opposed state under the forming die 100 and then the flat parisons 104 are introduced inside the molding dies 102.

Note that the two flat parisons 104 are each formed of six layers exclusive of the foamed layer 32d, including the upper skin layer 20, the outer base layer 22, the outer adhesive layer 24, the barrier layer 26, the inner adhesive layer 28 and the inner base layer 30 which are laminated in order from the side close to the molding die 102 toward the side away from the molding die 102. Moreover, the foamed layer 32d is formed separately in the form of a sheet by foaming resin in advance.

In a state in which the flat parison 104 is transferred with vacuuming onto a cavity of the molding die 102 to form the recess 107, as shown in FIG.7B, the sheet-like foamed layer 32d held to stick fast to the end portion of the robot arm 106 is welded within the recess 107 from the inner side of the flat parison 104.

After the sheet-like foamed layer 32d is welded, as shown in FIG.7C, the robot arm 106 is used to weld the integrated component (auxiliary component) 108 which is to be integrated into the tank body 12, onto the inner surface of the foamed layer 32d. Another embodiment makes it possible to perform both welding of the foamed layer 32d onto the inner body layer and welding of the integrated component 108 in the same process.

Thereafter, a cutting means such as a cutter (not shown) is used to cut the flat parisons 104, and with the molding dies 102 being clamped, air is blown out from an air nozzle (not shown) into the flat parisons 104 facing each other to allow the outer surfaces of the flat parisons 104 to be pressed against the molding dies 102, thereby forming the fuel tank 10. Then, the molding dies 102 are opened to take out the formed fuel tank 10. Note that in another embodiment, the fuel tank 10b is formed by twin-sheet blow molding, but the fuel tank 10b may be formed by continuous extrusion molding as described below.

In another embodiment, the foamed layer (heat insulating layer) 32d is included in the inner body layer constituting the outer wall 19 of the tank body 12, thereby making it possible to omit a post-process, such as attaching a heat insulating layer onto the outer side of the tank body 12, which has been carried out in the past. As a result, in another embodiment, heat insulation properties can be enhanced with a simple structure and thus generation of fuel vapor can be suppressed.

Also, in another embodiment, the foamed layer 32d is formed separately by foaming in advance the same resin as the inner base layer 30 (for example, high density polyethylene: HDPE), thereby allowing the inner base layer 30 and the foamed layer 32d to be easily welded to each other. Moreover, the inner base layer 30 and the foamed layer 32d are welded to adhere tightly to each other, thereby allowing durability to be enhanced.

Moreover, in another embodiment, when the fuel tank is formed by twin-sheet blow molding, welding of the foamed layer 32d onto the inner body layer and welding of the integrated component 108 can be performed in the same process.

Furthermore, in another embodiment, even where the foamed layer 32d is disposed innermost in the inner body layer, entry of fuel oil into the foamed layer 32d can be suppressed.

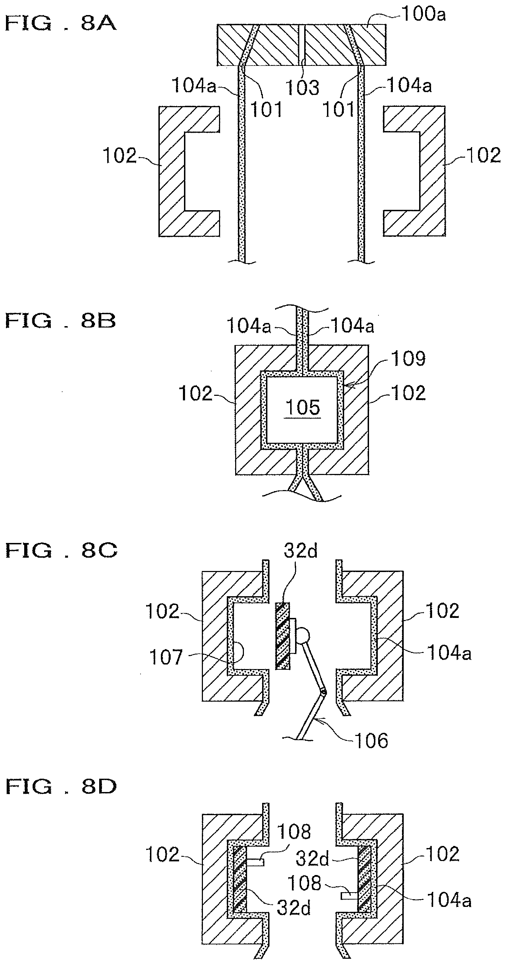

FIGS.8A to 8D are explanatory views showing a production process in which the fuel tank is formed by continuous extrusion molding. Note that in the description below, the same composing element as the composing element shown in FIG.6 and FIGS.7A to 7C is denoted by the same reference sign and thus detailed description thereof will be omitted.

Resin plasticized by an extrusion molding device (not shown) is extruded as a cylindrical parison 104a, from a nozzle 101 of a forming die 100a (see FIG.8A). Note that the parison 104a shaped in the form of a pipe is formed of six layers exclusive of the foamed layer 32d, including the upper skin layer 20, the outer base layer 22, the outer adhesive layer 24, the barrier layer 26, the inner adhesive layer 28 and the inner base layer 30 which are laminated in order from the outside (outer diameter side) toward the inside (inner diameter side). Moreover, the foamed layer 32d is formed separately in the form of a sheet by foaming resin in advance.

Subsequently, the parison 104a is sandwiched between the pair of molding dies 102, and with the upper and lower portions of the parison 104a being closed by the molding dies 102, air is blown into a hollow portion 105 of the parison 104a from an air nozzle 103 provided in a central part of the forming die 100a. This air allows the parison 104a to be inflated to be pressed against inner wall surfaces of the molding dies 102.

The parison 104a is pressed against the inner wall surfaces of the molding dies 102 to be elongated, thereby forming a hollow temporary molded article 109 (see FIG.8B). The hollow temporary molded article 109 is split up into two from nearly the central part along the vertical direction, with a cutter (not shown) . Then, with the molding dies 102 being separated from each other, as shown in FIG.8C, the sheet-like foamed layer 32d held to stick fast to the end portion of the robot arm 106 is welded within the recess 107 from the inner side of the parison 104a adhering to the inner wall surfaces of the molding dies 102.

After the sheet-like foamed layer 32d is welded, as shown in FIG.8D, the robot arm 106 is used to weld the integrated component (auxiliary component) 108 which is to be integrated into the tank body 12, onto the inner surface of the foamed layer 32d. Thus, even where the fuel tank 10b is formed by continuous extrusion molding, welding of the foamed layer 32d onto the inner body layer and welding of the integrated component 108 can be performed in the same process.

Finally, the pair of molding dies 102 separated from each other is closed to allow respective split faces of the temporary molded articles 109 split up into two to be welded to each other, thereby producing the fuel tank 10b.

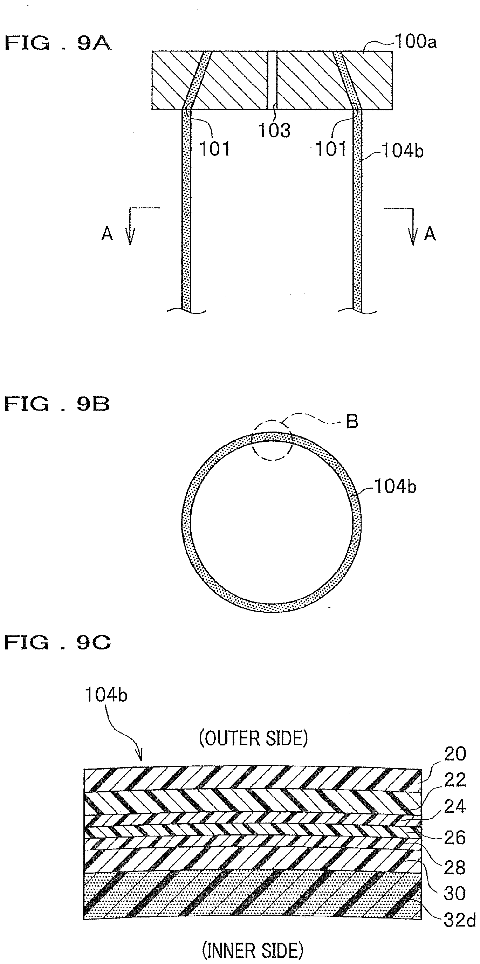

FIG.9A is an explanatory view of a process in which the fuel tank in FIG.6 is formed by another continuous extrusion molding; FIG.9B is a transverse cross-sectional view taken along the line A-A in FIG.9A; and FIG.9C is an enlarged cross-sectional view of the portion B in FIG.9B.

Another continuous extrusion molding is the same as the continuous extrusion molding described above in that the fuel tank 10b is blow-molded using a cylindrical (pipe-shaped) parison 104b in the same manner as in FIG.8A, but as shown in FIG.9C, is different from the continuous extrusion molding described above in that the parison 104b shaped in the form of a pipe is formed of seven layers including, in order from the outer side toward the inner side, the upper skin layer 20, the outer base layer 22, the outer adhesive layer 24, the barrier layer 26, the inner adhesive layer 28, the inner base layer 30 and the foamed layer 32d

Another continuous extrusion molding need not allow the foamed layer 32d to be foamed separately in the form of a sheet in advance, and is characterized in that the foamed layer 32d which is melted and foamed is extruded, from the nozzle 101 of the forming die 100a, as the parison 104b integrally with the upper skin layer 20, the outer base layer 22, the outer adhesive layer 24, the barrier layer 26, the inner adhesive layer 28 and the inner base layer 30.

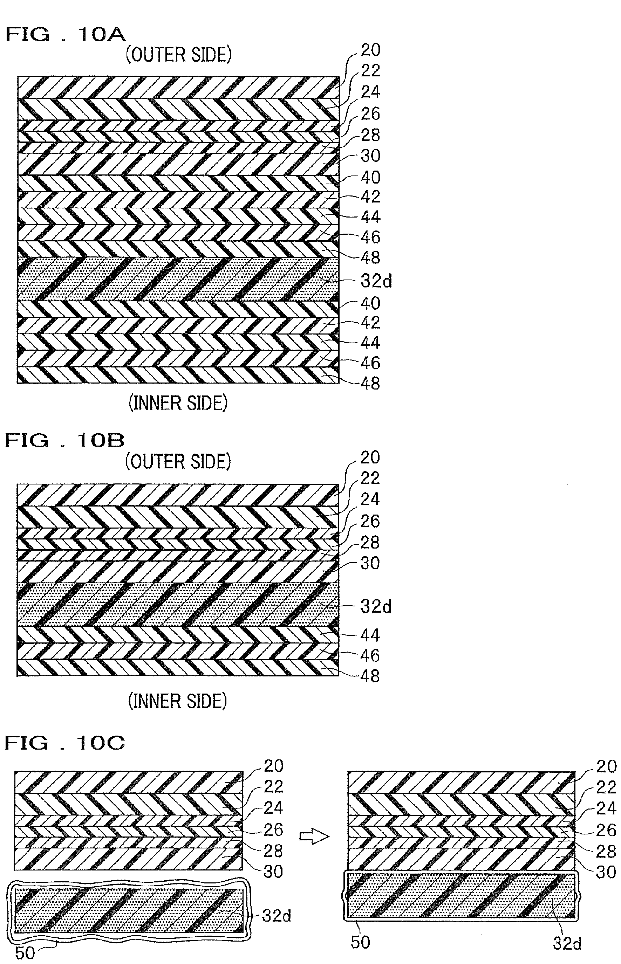

Next, modified examples of the fuel tank 10b produced by the production process according to another embodiment will be described below. FIG.10A is a partially enlarged cross-sectional view showing a structure of an outer wall of a fuel tank according to a first modified example of another embodiment; FIG.10B is a partially enlarged cross-sectional view showing a structure of an outer wall of a fuel tank according to a second modified example of another embodiment; and FIG.10C is an explanatory view showing a production process for a fuel tank according to a third modified example of another embodiment.

The first to third modified examples shown in FIGS.10A to 10C are characterized in that a protection layer (protection member) having a good function of barrier is provided to prevent fuel from permeating the foamed layer 32d and penetrating into outside air.

In the first modified example shown in FIG.10A, in order from an outer side toward an inner side, an HDPE layer 40 composed of high density polyethylene, an adPE layer 42 composed of adhesive resin, an EVOH layer 44 composed of ethylene vinyl alcohol copolymer, an adPE layer 46 composed of adhesive resin, and an HDPE layer 48 composed of high density polyethylene, are sequentially laminated to form the protection layer.

The protection layer includes an inner protection layer disposed on the inner side of the foamed layer 32d and an outer protection layer disposed on the outer side of the foamed layer 32d, and is configured to allow the foamed layer 32d to be enclosed with the inner protection layer and the outer protection layer. The inner protection layer and the outer protection layer have the same configuration, respectively, and the inner protection layer and the outer protection layer disposed inside and outside the foamed layer 32d function as barriers, thus making it possible to prevent fuel from permeating the foamed layer 32d. The fuel tank can be formed by continuous extrusion molding with the foamed layer 32d interposed between the inner protection layer and the outer protection layer.

In the second modified example shown in FIG.10B, provided on the inner side of the foamed layer 32d is an integrally-formed layer which is formed in an integrated fashion by laminating an EVOH layer 44 composed of ethylene vinyl alcohol copolymer, an adPE layer 46 composed of adhesive resin, and an HDPE layer 48 composed of high density polyethylene. The integrally-formed layer (the EVOH layer 44, the adPE layer 46, and the HDPE layer 48) is welded to the foamed layer 32d during formation, thereby making it possible to enhance a function of barrier to the foamed layer 32d.

In the third modified example shown in FIG.10C, the foamed layer 32d is sealed by a sealing member 50 in the form of a pouch and the sealing member 50 is welded to the inner base layer 30 during formation, thereby making it possible to enhance a function of barrier to the foamed layer 32d. Note that the sealing member 50 can be formed of, for example, adPE nylon, nylon, polyphenylene sulfide resin, LCP (Liquid Crystal Polymer) resin, or the like.

### Reference Signs List

- 10, 10a, 10b: Fuel tank (Automobile fuel tank)
- 12: Tank body
- 19: Outer wall
- 26: Barrier layer
- 30: Inner base layer (Base layer)
- 32: Structural member
- 32d: Foamed layer (Structural member)
- 34: Air space

## Claims

1. A method of producing an automobile fuel tank (10b) comprising a tank body (12), an outer wall (19) of the tank body being formed of a synthetic resin layer composed of a multilayer configuration, wherein
the synthetic resin layer includes an inner body layer (28, 30, 32d) and an outer body layer (20, 22, 24) with a barrier layer (26) interposed between the inner body layer and the outer body layer, and
the inner body layer includes a base layer (30) and a structural member (32d) with an air space internally provided,
**characterized in that** the method comprises:
forming the outer wall (19) of the inner body layer (28, 30, 32d) and the outer body layer (20, 22, 24) with the barrier layer (26) interposed between the inner body layer and the outer body layer, exclusive of the structural member that is a foamed layer (32d) in which a same resin as the base layer (30) is foamed; and
welding the foamed layer (32d) only to an inner face of the inner body layer (28, 30).

## Patentansprüche

1. Verfahren zur Herstellung eines Kraftfahrzeug-Kraftstofftanks (10b), der einen Tankkörper (12) aufweist, wobei eine Außenwand (19) des Tankkörpers aus einer Kunstharzschicht gebildet ist, die aus einer mehrschichtigen Konfiguration zusammengesetzt ist, wobei die Kunstharzschicht eine innere Körperschicht (28, 30, 32d) und eine äußere Körperschicht (20, 22, 24) enthält, wobei eine Barriereschicht (26) zwischen der inneren Körperschicht und der äußeren Körperschicht eingefügt ist, und
die innere Körperschicht eine Basisschicht (30) und ein Strukturelement (32d) mit einem im Inneren vorgesehenen Luftraum enthält,
**dadurch gekennzeichnet, dass** das Verfahren aufweist:
Ausbilden der Außenwand (19) der inneren Körperschicht (28, 30, 32d) und der äußeren Körperschicht (20, 22, 14) mit der Barriereschicht (26), die zwischen der inneren Körperschicht und der äußeren Körperschicht eingefügt ist, ausschließlich des Strukturelements, das eine geschäumte Schicht (32d) ist, in der gleiches Harz wie die Basisschicht (30) geschäumt ist; und
Schweißen der geschäumten Schicht (32d) nur an eine Innenfläche der inneren Körperschicht (28, 30).

## Revendications

1. Procédé de production d'un réservoir de carburant automobile (10b) comprenant un corps de réservoir (12), une paroi extérieure (19) du corps de réservoir étant formée d'une couche de résine synthétique composée d'une configuration multicouche, dans lequel
la couche de résine synthétique inclut une couche de corps intérieure (28, 30, 32d) et une couche de corps extérieure (20, 22, 24) avec une couche de barrière (26) interposée entre la couche de corps intérieure et la couche de corps extérieure, et
la couche de corps intérieure inclut une couche de base (30) et un élément structurel (32d) avec un espace d'air prévu en interne,
**caractérisé en ce que** le procédé comprend :
la formation de la paroi extérieure (19) de la couche de corps intérieure (28, 30, 32d) et la couche de corps extérieure (20, 22, 24) avec la couche de barrière (26) interposée entre la couche de corps intérieure et la couche de corps extérieure, à l'exclusion de l'élément structurel qui est une couche expansée (32d) dans laquelle une résine identique à celle de la couche de base (30) est expansée ; et
le soudage de la couche expansée (32d) seulement à une face intérieure de la couche de corps intérieure (28, 30).
